# EUROPÄISCHE PATENTSCHRIFT

(11) **EP 2 507 520 B1**
(45) Veröffentlichungstag und Bekanntmachung des Hinweises auf die Patenterteilung: **20.04.2016**
(21) Anmeldenummer: 10781663.9
(22) Anmeldetag: 16.11.2010
(51) Int. Cl.: F16B 5/06, F16B 37/08

(54) **BEFESTIGUNGSVORRICHTUNG UND MIT EINER BEFESTIGUNGSVORRICHTUNG AUSGESTATTETES ANBAUTEIL**
FASTENING DEVICE AND ATTACHMENT PART HAVING A FASTENING DEVICE
DISPOSITIF DE FIXATION ET PARTIE RAPPORTÉE ÉQUIPÉE D'UN DISPOSITIF DE FIXATION

(30) Priorität: 03.12.2009 DE 102009056907
(43) Veröffentlichungstag der Anmeldung: 10.10.2012
(73) Patentinhaber: A. RAYMOND et Cie, 38000 Grenoble (FR)
(72) Erfinder: HAUSER, Ingo, 79400 Kandern (DE)
(74) Vertreter: RACKETTE Patentanwälte PartG mbB
(86) Internationale Anmeldenummer: PCT/EP2010/067568
(87) Internationale Veröffentlichungsnummer: WO 2011/067107

(56) Entgegenhaltungen:
- EP-A1- 1 621 782
- WO-A2-2009/014817

## Beschreibung

Die Erfindung betrifft eine Befestigungsvorrichtung gemäß dem Oberbegriff des Patentanspruches 1 und ein mit einer derartigen Befestigungsvorrichtung ausgestattetes Anbauteil.

Eine derartige Befestigungsvorrichtung mit Anbauteil ist aus WO 2009/014817 A2 oder aus EP 1 621 782 A1 bekannt. Die vorbekannte Befestigungsvorrichtung zum Befestigen eines mit der Befestigungsvorrichtung verbundenen Anbauteiles an einem wenigstens ein längliches Befestigungselement aufweisenden Trägerteil verfügt über eine sich in einer Längsrichtung erstreckende Aufnahmehülse, die zum Umschließen des Befestigungselements mit einem radialen Abstand eingerichtet ist. Weiterhin ist eine Hintergriffseinheit vorhanden, an der eine Anzahl von Hintergriffszungen zum Hintergreifen einer Raststruktur des Befestigungselements ausgebildet sind. Die Hintergriffszungen sind flexibel ausgebildet, so dass in radialer Richtung unterschiedlich dimensionierte Befestigungselemente mit der vorbekannten Befestigungsvorrichtung verwendbar sind. Allerdings ergibt sich das Problem, dass Befestigungselemente mit einem verhältnismäßig kleinen Durchmesser nur spielbehaftet mit der vorbekannten Befestigungsvorrichtung in Eingriff bringbar sind.

Der Erfindung liegt die Aufgabe zugrunde, eine Befestigungsvorrichtung und ein Anbauteil der eingangs genannten Art anzugeben, mit der längliche Befestigungselemente mit unterschiedlichen Durchmessern im Wesentlichen spielfrei mit der Befestigungsvorrichtung in Eingriff kommen.

Diese Aufgabe wird bei einer Befestigungsvorrichtung beziehungsweise bei einem Anbauteil der eingangs genannten Art erfindungsgemäß mit den kennzeichnenden Merkmalen des Patentanspruches 1 beziehungsweise des Patentanspruches 8 gelöst.

Dadurch, dass wenigstens ein in Längsrichtung verschiebbares Ausgleichselement in der Aufnahmehülse vorhanden ist, lässt sich der Nutzquerschnitt der Aufnahmehülse je nach Stellung des oder jedes Ausgleichselementes an verschiedene Querschnitte von länglichen Befestigungselementen anpassen.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Erläuterung von Ausführungsbeispielen mit Bezug auf die Figuren der Zeichnung.

Es zeigen:
- Fig. 1: in einer perspektivischen Ansicht ein Ausführungsbeispiel einer erfindungsgemäßen Befestigungsvorrichtung mit zwei Ausgleichshülsen als Ausgleichselemente, das vollständig aus Kunststoff hergestellt ist,
- Fig. 2: in einer Schnittansicht das Ausführungsbeispiel gemäß Fig. 1 im Eingriff mit einem Grobgewindebolzen mit einem verhältnismäßig kleinen Durchmesser als Befestigungselement,
- Fig. 3: in einer Schnittansicht das Ausführungsbeispiel gemäß Fig. 1 im Eingriff mit einem Grobgewindebolzen mittleren Durchmessers als Befestigungselement,
- Fig. 4: in einer Schnittansicht das Ausführungsbeispiel gemäß Fig. 1 im Eingriff mit einem Grobgewindebolzen mit einem verhältnismäßig großen Durchmesser als Befestigungselement,
- Fig. 5: in einer perspektivischen Ansicht ein weiteres Ausführungsbeispiel einer erfindungsgemäßen Befestigungsvorrichtung, das entsprechend dem Ausführungsbeispiel gemäß Fig. 1 mit zwei Ausgleichshülsen als Ausgleichselemente ausgebildet und als Zusammenbauteil mit einer separaten, aus Metall hergestellten Hintergriffseinheit hergestellt ist,
- Fig. 6: in einer Schnittansicht das Ausführungsbeispiel gemäß Fig. 5 im Eingriff mit einem Grobgewindebolzen mittleren Durchmessers als Befestigungselement,
- Fig. 7: in einer perspektivischen Ansicht ein drittes Ausführungsbeispiel einer erfindungsgemäßen Befestigungsvorrichtung, die vollständig aus Kunststoff hergestellt und mit drei Gleitschuhen als Ausgleichselemente ausgebildet ist,
- Fig. 8: in einer Schnittansicht das Ausführungsbeispiel gemäß Fig. 7 im Eingriff mit einem Grobgewindebolzen eines verhältnismäßig kleinen Durchmessers als Befestigungselement und
- Fig. 9: in einer Schnittansicht das Ausführungsbeispiel gemäß Fig. 7 im Eingriff mit einem Grobgewindebolzen mit einem verhältnismäßig großen Durchmesser als Befestigungselement.

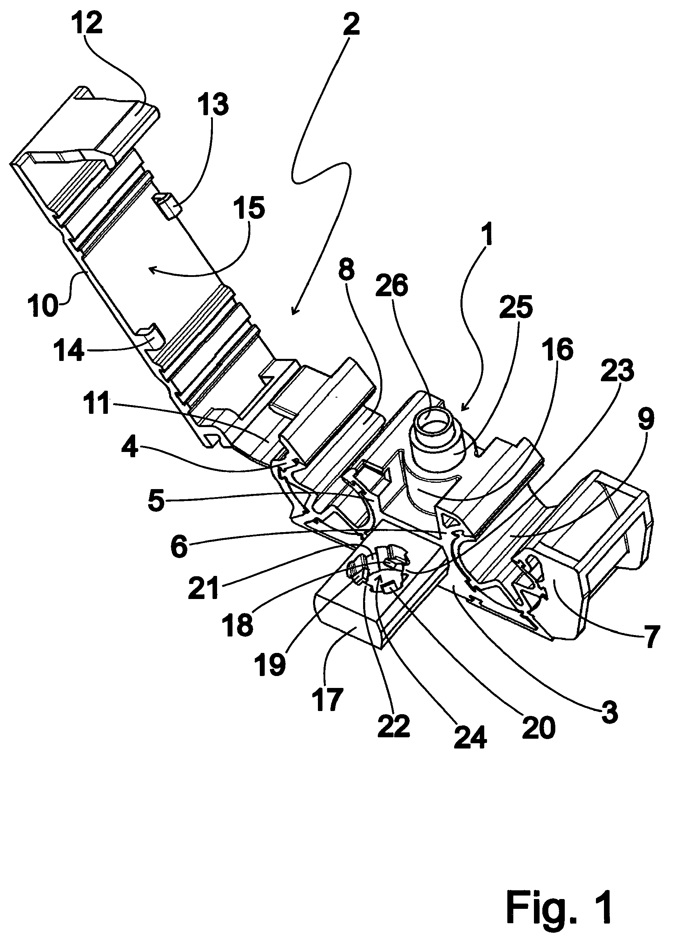

Fig. 1 zeigt in einer perspektivischen Ansicht ein Ausführungsbeispiel einer vollständig aus Kunststoff in einem einzigen Spritzgussvorgang hergestellten Befestigungsvorrichtung 1, die einstückig in einen Leitungshalter 2 als ein an ein in Fig. 1 nicht dargestelltes Trägerteil anzubauendes Anbauteil integriert ist. Der Leitungshalter 2 verfügt über ein Grundteil 3 sowie über ein erstes Paar von Seitenwangen 4, 5 und über ein zweites Paar von Seitenwangen 6, 7, die an dem Grundteil 3 angeformt sind und zwischen denen zum Halten von jeweils einer Leitungsanordnung jeweils eine aus einem weichelastischen Kunststoff hergestellte, C-förmige Lagermatte 8, 9 angeordnet ist. Die Befestigungsvorrichtung 1 ist bei dem Ausführungsbeispiel gemäß Fig. 1 zwischen den Paaren von Seitenwangen 4, 5, 6, 7 positioniert.

Weiterhin verfügt der Leitungshalter 2 über ein Deckelteil 10, das über einen Scharnierabschnitt 11 schwenkbar an dem Grundteil 3 angebracht und über eine Anzahl von Rasthaken 12, 13, 14 mit dem Grundteil 3 verriegelbar ist. Das Deckelteil 10 ist mit einem flächigen Abdeckbereich 15 ausgebildet, der in einer auf dem Grundteil 3 aufliegenden Anordnung die Befestigungsvorrichtung 1 überdeckt.

Die Befestigungsvorrichtung 1 gemäß dem Ausführungsbeispiel von Fig. 1 verfügt über eine hohlzylinderartig ausgebildete Aufnahmehülse 16 sowie über eine Hintergriffseinheit 17, die in der Anordnung gemäß Fig. 1 in einer entsprechend der Entnahme aus dem Spritzgusswerkzeug aus dem Grundteil 3 ausgezogenen Stellung dargestellt ist. Die Hintergriffseinheit 17 ist mit einer Anzahl von beispielsweise drei Hintergriffszungen 18, 19, 20 und mit zwischen den Hintergriffszungen 18, 19, 20 liegenden Anschlagsockeln 21, 22, 23 ausgebildet, die in einer in der Hintergriffseinheit 17 ausgebildeten Durchsteckausnehmung 24 angeordnet sind.

Die Hintergriffszungen 18, 19, 20 sind in einer in Richtung der Aufnahmehülse 16 weisenden Richtung angestellt sowie umfänglich gleich beabstandet positioniert. Die Anschlagsockel 21, 22, 23 ragen in radialer Richtung in die Durchsteckausnehmung hinein.

Weiterhin weist die Befestigungsvorrichtung 1 in dem Ausführungsbeispiel gemäß Fig. 1 als Ausgleichselemente eine äußere Ausgleichshülse 25 und eine innere Ausgleichshülse 26 auf, die hohlzylinderartig ausgebildet und konzentrisch innerhalb der Aufnahmehülse 16 verschiebbar gelagert sind, wobei die innere Ausgleichshülse 26 innerhalb der äußeren Ausgleichshülse 25 liegt. In der Darstellung gemäß Fig. 1 sind die Aufnahmehülse 16 sowie die Ausgleichshülsen 25, 26 in einer in axialer Richtung stirnseitig aneinander grenzenden Anordnung entsprechend der Entnahme aus dem Spritzgusswerkzeug dargestellt.

Bei geschlossenem Deckelteil 10 ist der Abdeckbereich 15 auf der der Hintergriffseinheit 17 abgewandten Seite der Aufnahmehülse 16 angeordnet und verhindert, dass die Ausgleichshülsen 25, 26 aus der Aufnahmehülse 16 austreten.

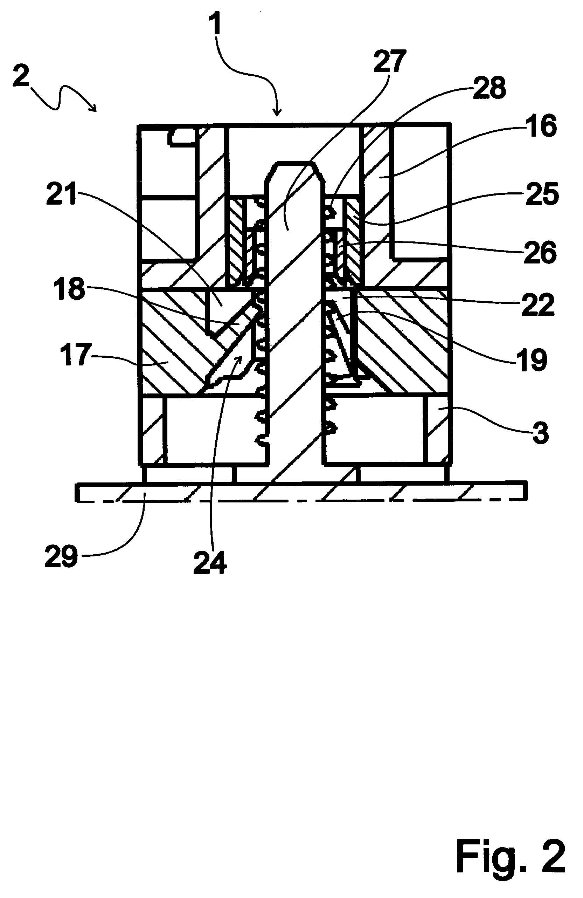

Fig. 2 zeigt in einer Schnittansicht das Ausführungsbeispiel einer erfindungsgemäßen Befestigungsvorrichtung 1 gemäß Fig. 1 im Eingriff mit einem Grobgewindebolzen 27 eines verhältnismäßig kleinen Durchmessers als längliches Befestigungselement, der als Raststruktur mit einer Gewindestruktur 28 ausgebildet und an einem Trägerteil 29 befestigt ist. Aus Fig. 2 ist ersichtlich, dass beim Einsatz mit einem Grobgewindebolzen 27 mit einem verhältnismäßig kleinen Durchmesser die innere Ausgleichshülse 26 und die äußere Ausgleichshülse 25 nach Zusammenschieben aus der in Fig. 1 dargestellten Spritzanordnung konzentrisch innerhalb der Aufnahmehülse 16 angeordnet sind und an den als Tiefenanschlag dienenden Anschlagsockeln 21, 22, 23 aufliegen.

Bei Verwendung mit einem Grobgewindebolzen 27 mit einem verhältnismäßig kleinen Durchmesser sind die Hintergriffszungen 18, 19, 20 im Wesentlichen vollständig relaxiert und hintergreifen im Wesentlichen ohne Vorspannung die Grobgewindestruktur 28. Die innere Ausgleichshülse 26 umschließt dabei die Grobgewindestruktur 28 des Grobgewindebolzens 27 und liegt an diesem an, während die Hintergriffszungen 18, 19, 20 die Gewindestruktur 28 des Grobgewindebolzens 27 hintergreifen. Dadurch ist in dieser eingeschobenen Ausgleichsstellung der beiden Ausgleichshülsen 25, 26 mit einem minimalen Nutzquerschnitt eine im Wesentlichen spielfreie Befestigung des Leitungshalters 2 an dem Trägerteil 29 sichergestellt.

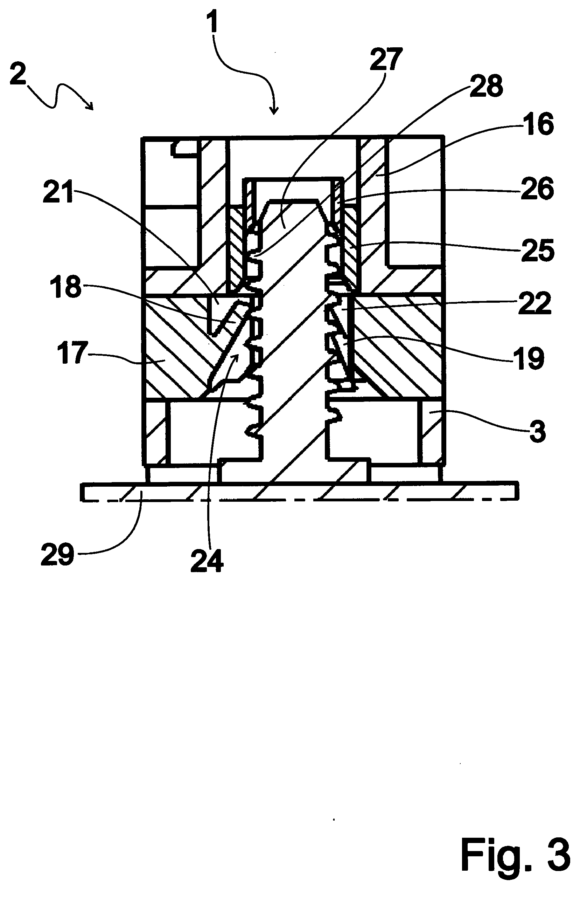

Fig. 3 zeigt in einer Schnittansicht das Ausführungsbeispiel einer erfindungsgemäßen Befestigungsvorrichtung 1 gemäß Fig. 1 mit einem Grobgewindebolzen 27 mittleren Durchmessers als längliches Befestigungselement in einer auf den Grobgewindebolzen 27 aufgesteckten Anordnung. Der Grobgewindebolzen 27 gemäß Fig. 2 ist mit einer Gewindestruktur 28 als Raststruktur ausgebildet. Aufgrund des gegenüber dem Grobgewindebolzen 27 mit einem verhältnismäßig kleinen Durchmesser gemäß Fig. 2 größeren Durchmessers des Grobgewindebolzens 27 mit einem mittleren Durchmesser gemäß Fig. 3 ist die innere Ausgleichshülse 26 gegenüber der Anordnung gemäß Fig. 2 in axialer Richtung von der Hintergriffseinheit 17 weg in eine ausgeschobene Versatzstellung versetzt, so dass nunmehr bei diesem mittleren Nutzquerschnitt der Befestigungsvorrichtung 1 die äußere Ausgleichshülse 25 die Gewindestruktur 28 des Grobgewindebolzens 27 mit mittlerem Durchmesser im Wesentlichen bündig umschließt.

Die Hintergriffszungen 18, 19, 20 hintergreifen aufgrund des gegenüber der Anordnung von Fig. 2 größeren Durchmessers des Grobgewindebolzens 27 die Gewindestruktur 28 mit einer gewissen Vorspannung, da sie radial nach außen gebogen sind. Somit ist auch bei der Anordnung gemäß Fig. 3 mit der inneren Ausgleichshülse 26 in einer Versatzstellung und der äußeren Ausgleichshülse 25 in einer eingeschobenen Ausgleichsstellung ein im Wesentlichen spielfreier Hintergriff des Grobgewindebolzens 27 gewährleistet.

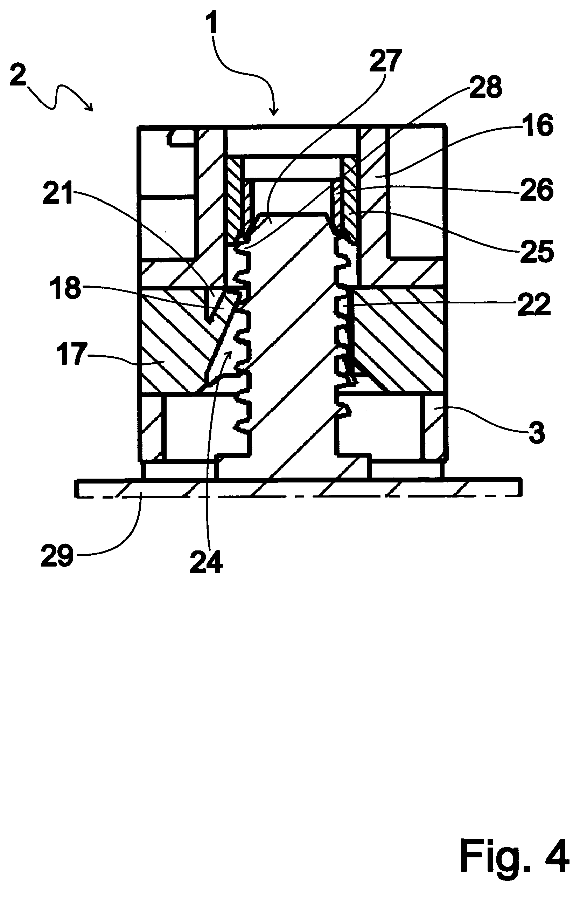

Fig. 4 zeigt in einer Schnittansicht das Ausführungsbeispiel gemäß Fig. 1 im Eingriff mit einem Grobgewindebolzen 27 mit einem verhältnismäßig großen Durchmesser als längliches Befestigungselement, der mit einer Gewindestruktur 28 als Raststruktur ausgebildet ist. Aufgrund des gegenüber der Anordnung gemäß Fig. 3 nochmals größeren Durchmessers des Grobgewindebolzens 27 ist nunmehr bei diesem maximalen Nutzquerschnitt der Befestigungsvorrichtung 1 auch die äußere Ausgleichshülse 25 in axialer Richtung in einem Abstand von der Hintergriffseinheit 17 angeordnet, so dass die Aufnahmehülse 16 den Grobgewindebolzen 27 in der Anordnung gemäß Fig. 4 mit einem verhältnismäßig kleinen Abstand umschließt, während die Ausgleichshülsen 25, 26 auf dem dem Trägerteil 29 abgewandten Ende des Grobgewindebolzens 27 im wesentlichen spielfrei fixierend aufliegen.

Die Hintergriffszungen 18, 19, 20 sind gegenüber der Stellung gemäß Fig. 3 nochmals weiter radial nach außen gebogen, so dass sie gegenüber der Anordnung gemäß Fig. 3 mit einer noch höheren Vorspannung die Gewindestruktur 28 des Grobgewindebolzens 27 mit verhältnismäßig großem Durchmesser hintergreifen und diesen zusammen mit den Ausgleichshülsen 25, 26 sowie der Aufnahmehülse 16 im Wesentlichen spielfrei in der Befestigungsvorrichtung 1 halten.

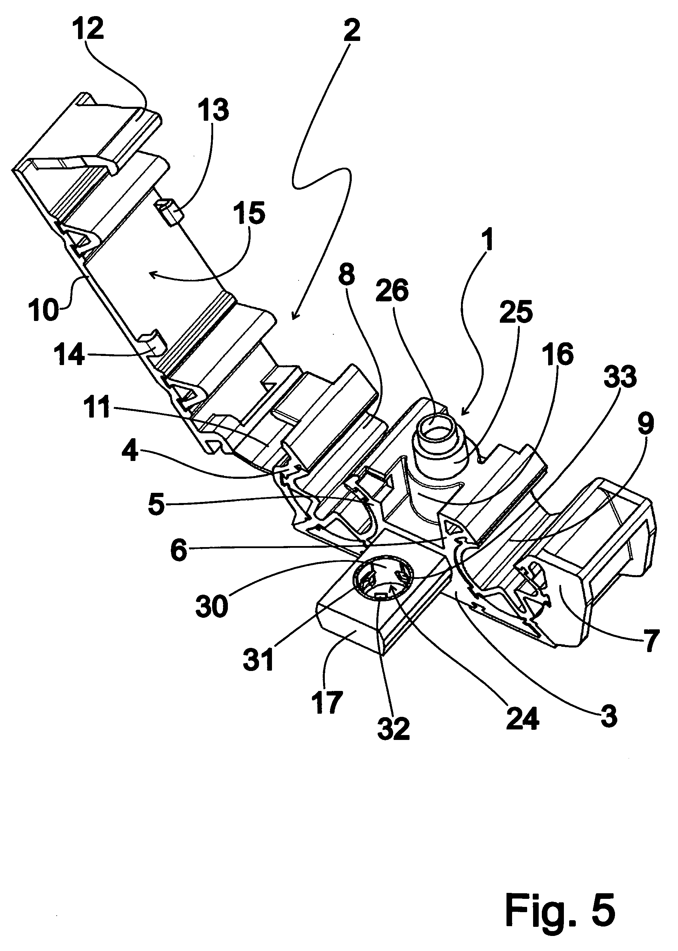

Fig. 5 zeigt in einer perspektivischen Ansicht ein weiteres Ausführungsbeispiel einer erfindungsgemäßen Befestigungsvorrichtung 1, wobei sich bei dem Ausführungsbeispiel gemäß Fig. 1 und dem Ausführungsbeispiel gemäß Fig. 5 einander entsprechende Elemente mit den gleichen Bezugszeichen versehen und im weiteren zum Teil nicht näher erläutert sind. Das Ausführungsbeispiel gemäß Fig. 5 verfügt über einen aus Metall hergestellten Hintergriffsring 30, während die Befestigungsvorrichtung 1 und der Leitungshalter 2 ansonsten aus Kunststoff hergestellt sind. Der Hintergriffsring 30 ist in die in der Hintergriffseinheit 17 ausgebildete Durchsteckausnehmung 24 eingefügt und weist entsprechend den Hintergriffszungen 18, 19, 20 ausgerichtete, abgewinkelte Hintergriffszungen 31, 32, 33 auf.

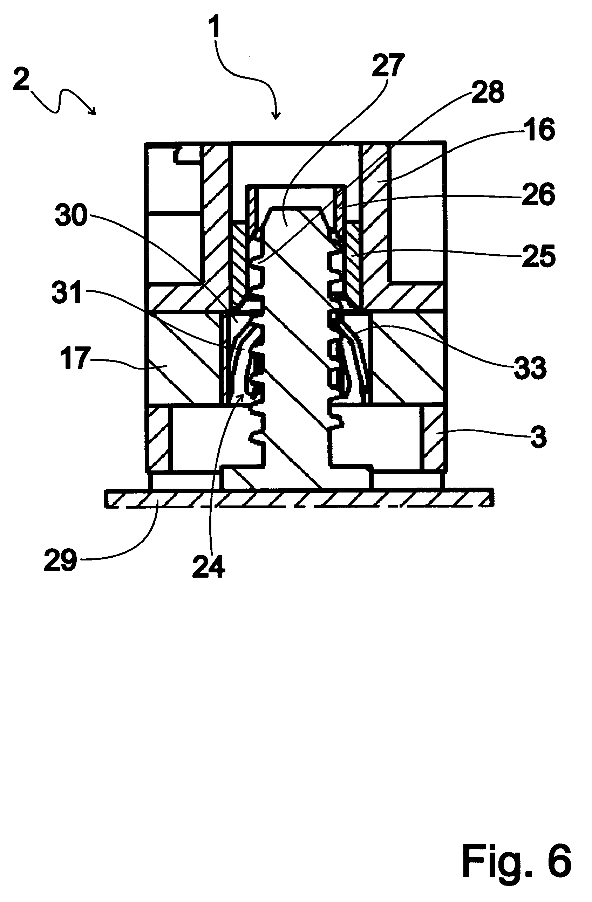

Fig. 6 zeigt das Ausführungsbeispiel einer erfindungsgemäßen Befestigungsvorrichtung 1 gemäß Fig. 5 im Eingriff mit einem Grobgewindebolzen 27 mit mittlerem Durchmesser als mit einer Gewindestruktur 28 als Raststruktur ausgebildeten länglichen Befestigungselement entsprechend der Anordnung gemäß Fig. 3. Entsprechend dem Hintergriff der Hintergriffszungen 18, 19, 20 bei dem Ausführungsbeispiel gemäß Fig. 1 hintergreifen bei dem Ausführungsbeispiel gemäß Fig. 5 die Hintergriffszungen 31, 32, 33 die Gewindestruktur 28 des Grobgewindebolzens 27 mit einer gewissen Vorspannung, um zusammen mit der an der Gewindestruktur 28 des Grobgewindebolzens 27 anliegenden äußeren Ausgleichshülse 25 in einer eingeschobenen Ausgleichsstellung und der inneren Ausgleichshülse 26 in einer ausgeschobenen Versatzstellung den Grobgewindebolzen 27 im Wesentlichen spielfrei mit der Befestigungsvorrichtung 1 zu verbinden.

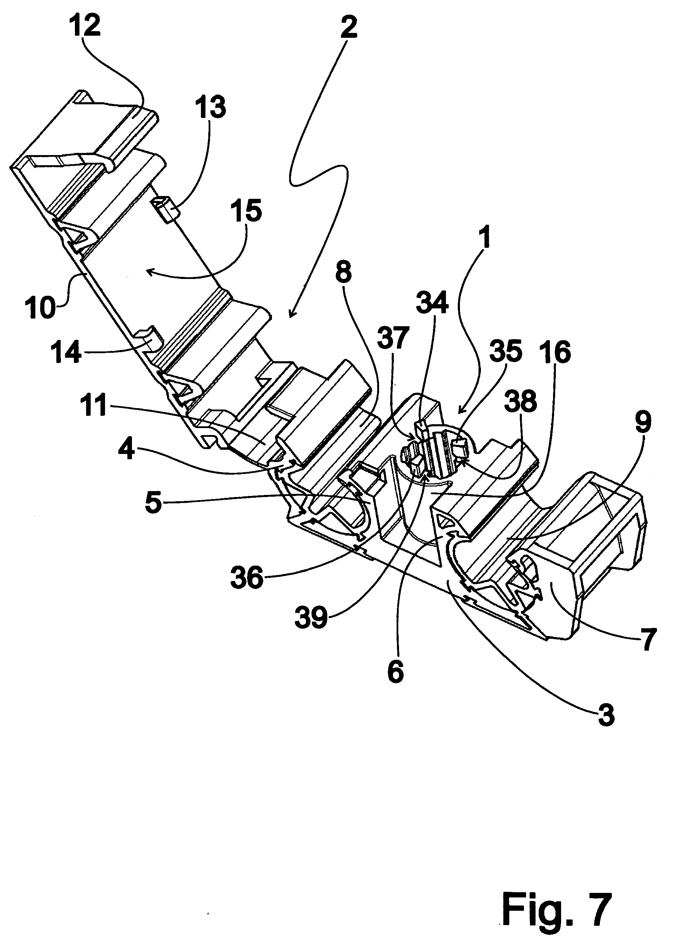

Fig. 7 zeigt in einer perspektivischen Ansicht ein weiteres Ausführungsbeispiel einer erfindungsgemäßen Befestigungsvorrichtung 1, wobei sich bei dem Ausführungsbeispiel gemäß Fig. 1, dem Ausführungsbeispiel gemäß Fig. 5 und dem Ausführungsbeispiel gemäß Fig. 7 einander entsprechende Elemente mit den gleichen Bezugszeichen versehen und nachfolgend zum Teil nicht näher erläutert sind. Bei dem Ausführungsbeispiel gemäß Fig. 7 sind als Ausgleichselemente eine Anzahl von beispielsweise drei Gleitschuhen 34, 35, 36 vorhanden, die in durch seitliche Führungswangen gebildeten Gleitschuhführungsschienen 37, 38, 39 auf der Innenseite der Aufnahmehülse 16 in Längsrichtung der Aufnahmehülse 16 verschiebbar gelagert sind. In der Anordnung gemäß Fig. 7 sind die Gleitschuhe 34, 35, 36 entsprechend der Entnahme aus dem Spritzgusswerkzeug über die dem Deckelteil 10 zugewandte Seite der Aufnahmehülse 16 erhaben dargestellt.

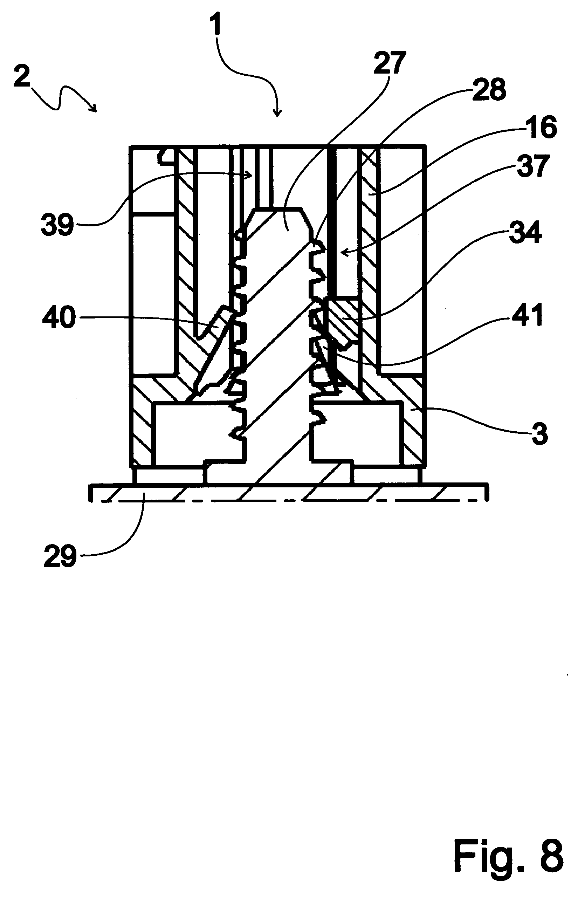

Fig. 8 zeigt in einer Schnittansicht das Ausführungsbeispiel einer erfindungsgemäßen Befestigungsvorrichtung 1 gemäß Fig. 7 im Eingriff mit einem eine Gewindestruktur 28 als Raststruktur aufweisender Grobgewindebolzen 27 mit einem verhältnismäßig kleinen Durchmesser als längliches Befestigungselement. Aus Fig. 8 ist ersichtlich, dass an der Innenseite der Aufnahmehülse 16 ausgebildete Hintergriffszungen 40, 41 mit der an dem Grobgewindebolzen 27 ausgebildeten Gewindestruktur 28 entsprechend den voranstehend erläuterten Ausführungsbeispielen in Eingriff sind, während die Gleitschuhe 34, 35, 36 aufgrund des verhältnismäßig geringen Durchmessers des Grobgewindebolzens 27 bei diesem kleinen Nutzquerschnitt der Aufnahmehülse 16 bis in den Bereich der Hintergriffszungen 40, 41 eingetaucht sind und in dieser eingeschobenen Ausgleichsstellung an der Gewindestruktur 28 des Grobgewindebolzens 27 anliegen. Dadurch ist der Grobgewindebolzen 27 mit einem verhältnismäßig geringen Durchmesser im Wesentlichen spielfrei in der Befestigungsvorrichtung 1 angeordnet.

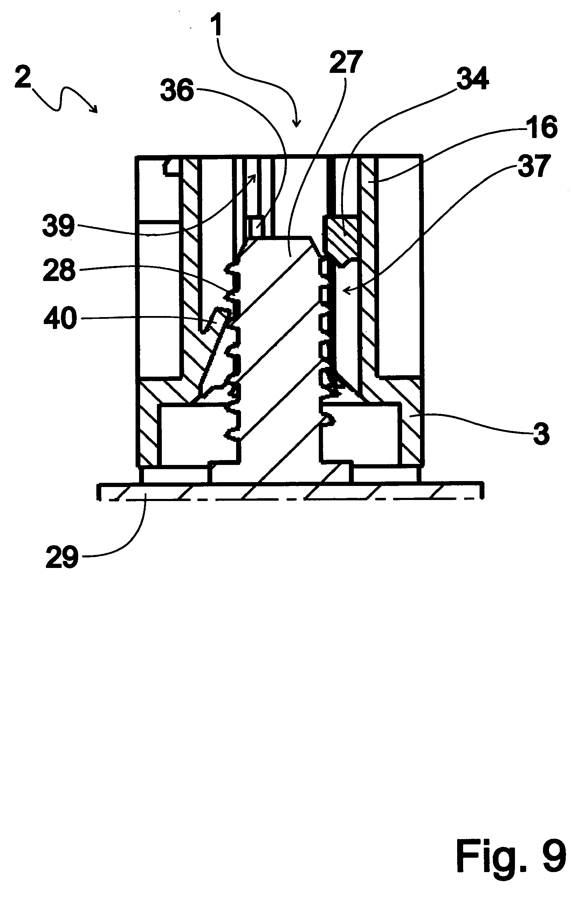

Fig. 9 zeigt in einer Schnittansicht das Ausführungsbeispiel gemäß Fig. 7 mit einem Grobgewindebolzen 27 mit einem verhältnismäßig großen Durchmesser als längliches Befestigungselement, der so dimensioniert ist, dass nach Einführen des Grobgewindebolzens 27 in die Aufnahmehülse 16 die Gleitschuhe 34, 35, 36 in Längsrichtung von den Hintergriffszungen 40, 41 weg in eine ausgeschobene Versatzstellung für einen großen Nutzquerschnitt der Befestigungsvorrichtung 1 bewegt worden sind und mit einer Abschrägung an dem von dem Trägerteil 29 abgewandten Endbereich des Grobgewindebolzens 27 stabilisierend anliegen. Zusammen mit der aufgrund des verhältnismäßig großen Durchmessers des Grobgewindebolzens 27 relativ hohen Vorspannung der Hintergriffszungen 40, 41 ist auch in der ausgeschobenen Versatzstellung der Gleitschuhe 34, 35, 36 gemäß Fig. 9 der Grobgewindebolzen 27 trotz eines gewissen radialen Abstandes von der Aufnahmehülse 16 durch das Anliegen an den Gleitschuhführungsschienen 37, 38, 39 im Wesentlichen spielfrei fixiert.

## Patentansprüche

1. Befestigungsvorrichtung zum Befestigen eines mit der Befestigungsvorrichtung (1) verbundenen Anbauteiles (2) an einem wenigstens ein längliches Befestigungselement (27) aufweisenden Trägerteil (29), mit einer sich in einer Längsrichtung erstreckenden Aufnahmehülse (16), die zum Umschließen des Befestigungselements (27) mit einem radialen Abstand eingerichtet ist, und mit einer Anzahl von Hintergriffszungen (18, 19, 20; 31, 32, 33; 40, 41), die zum Hintergreifen einer Raststruktur (28) des Befestigungselements (27) ausgebildet sind, **dadurch gekennzeichnet, dass** wenigstens ein Ausgleichselement (25, 26, 34, 35, 36) vorhanden ist, das in der Aufnahmehülse (16) in Längsrichtung verschiebbar gelagert ist und das in einer in Bezug auf die Hintergriffszungen (18, 19, 20; 31, 32, 33; 40, 41) eingeschobenen Ausgleichsstellung den Nutzquerschnitt der Aufnahmehülse (16) gegenüber einer in Bezug auf die eingeschobene Ausgleichsstellung ausgeschobenen Versatzstellung verringert.

2. Befestigungsvorrichtung nach Anspruch 1, **dadurch gekennzeichnet, dass** das oder ein Ausgleichselement eine hohlzylinderartig ausgebildete Ausgleichshülse (25, 26) ist.

3. Befestigungsvorrichtung nach Anspruch 2, **dadurch gekennzeichnet, dass** zwei Ausgleichshülsen (25, 26) vorhanden sind, die in einer eingeschobenen Ausgleichsstellung zum Erzielen eines minimalen Nutzquerschnittes ineinander liegend angeordnet sind.

4. Befestigungsvorrichtung nach einem der Ansprüche 1 bis 3, **dadurch gekennzeichnet, dass** das oder ein Ausgleichselement ein Gleitschuh (34, 35, 36) ist, der in einer an der Aufnahmehülse (16) ausgebildeten Gleitschuhführungsschiene (37, 38, 39) verschiebbar gelagert ist.

5. Befestigungsvorrichtung nach Anspruch 4, **dadurch gekennzeichnet, dass** wenigstens drei Gleitschuhe (34, 35, 36) vorhanden sind, die symmetrisch um die Längsachse der Aufnahmehülse (16) verteilt sind.

6. Befestigungsvorrichtung nach einem der Ansprüche 1 bis 5, **dadurch gekennzeichnet, dass** für das oder jedes Ausgleichselement (25, 26; 34, 35, 36) ein Tiefenanschlag (21, 22, 23) vorhanden ist.

7. Befestigungsvorrichtung nach Anspruch 6, **dadurch gekennzeichnet, dass** ein in einer Schließstellung die Aufnahmehülse (16) abdeckender Abdeckbereich (15) eines Deckelteils (10) vorhanden ist.

8. Anbauteil mit einer Befestigungsvorrichtung (1) gemäß einem der Ansprüche 1 bis 7.

9. Anbauteil nach Anspruch 8 mit einem die Ausgleichshülse (16) abdeckenden Abdeckbereich (15).

10. Anbauteil nach Anspruch 8 oder Anspruch 9, das als Leitungshalter (2) ausgebildet ist.

## Claims

1. Fastening device for fastening an attachment part (2) connected with the fastening device (1) to a carrier part (29) having at least one elongated fastening element (27), with a holding sleeve (16) extending in a longitudinal direction which is designed to embrace the fastening element (27) at a radial distance, and with a number of engaging tongues (18, 19, 20; 31, 32, 33; 40, 41) which are designed to engage behind a snap-locking structure (28) of the fastening element (27), **characterised in that** at least one compensating element (25, 26, 34, 35, 36) is provided which is mounted in the holding sleeve (16) so as to be displaceable in the longitudinal direction and which, in a compensating position in which it is slid in in relation to the engaging tongues (18,19, 20; 31, 32, 33; 40, 41), reduces the useful cross section of the holding sleeve (16) in comparison with an offset position in which it is slid out in relation to the slid-in compensating position.

2. Fastening device according to claim 1, **characterised in that** the, or a, compensating element is a compensating sleeve (25, 26) in hollow cylindrical form.

3. Device according to claim 2, **characterised in that** two compensating sleeves (25, 26) are provided which, in a slid-in compensating position, are arranged inside one another in order to achieve a minimum useful cross section.

4. Fastening device according to one of the claims 1 to 3, **characterised in that** the, or a, compensating element is a slide shoe (34, 35, 36) which is mounted displaceably in a slide shoe guide track (37, 38, 39) formed on the holding sleeve (16).

5. Fastening device according to claim 4, **characterised in that** at least three slide shoes (34, 35, 36) are provided which are distributed symmetrically around the longitudinal axis of the holding sleeve (16).

6. Fastening device according to one of the claims 1 to 5, **characterised in that** a depth limit stop (21, 22, 23) is provided for the, or each, compensating element (25, 26; 34, 35, 36).

7. Fastening device according to claim 6, **characterised in that** a covering region (15) of a cover part (10) is provided which, in a closed position, covers the holding sleeve (16).

8. Attachment part with a fastening device (1) according to one of the claims 1 to 7.

9. Attachment part according to claim 8 with a covering region (15) covering the compensating sleeve (16).

10. Attachment part according to claim 8 or claim 9 which is designed as a cable holder (2).

## Revendications

1. Dispositif de fixation pour la fixation d'un élément rapporté (2) équipé du dispositif de fixation (1) sur un composant faisant office de support (29) comprenant au moins un organe de fixation de forme allongée (27), qui comporte une douille d'emmanchement (16) s'étendant selon une orientation longitudinale, qui est agencée pour enserrer l'organe de fixation (27) avec un certain intervalle d'écartement dans le plan radial, et qui comporte un certain nombre de languettes de mise en prise d'accrochage par derrière (18, 19, 20 ; 31, 32, 33 ; 40, 41) qui sont agencées pour venir cramponner par derrière une structure de mise en prise d'encastrement (28) dont l'organe de fixation (27) est muni, **caractérisé en ce qu'**il est prévu au moins un élément de compensation (25, 26, 34, 35, 36) qui est disposé dans la douille d'emmanchement (16) avec la possibilité de coulisser à l'intérieur de celle-ci dans le plan longitudinal et qui, dans une position rentrée de compensation, restreint la section transversale utile de la douille d'emmanchement (16) comparativement à ce qu'elle est dans une position sortie en déport par rapport à la position rentrée de compensation.

2. Dispositif de fixation selon la revendication 1, **caractérisé en ce que** l'élément ou un élément de compensation consiste en une douille de compensation se présentant sous la forme d'une cylindre creux (25, 26).

3. Dispositif de fixation selon la revendication 2, **caractérisé en ce qu'**il est prévu deux douilles de compensation (25, 26) qui, dans une position rentrée, sont concentriquement insérées l'une dans l'autre pour définir une section transversale utile minimale.

4. Dispositif de fixation selon l'une des revendications 1 à 3, **caractérisé en ce que** l'élément ou un élément de compensation consiste en un patin glissant (34, 35, 36) qui est disposé avec la possibilité de coulisser dans une glissière de guidage prévue à cet effet dans la douille d'emmanchement (16).

5. Dispositif de fixation selon la revendication 4, **caractérisé en ce qu'**il est prévu au moins trois patins glissants (34, 35, 36) qui sont disposés de manière symétrique autour de l'axe longitudinal de la douille d'emmanchement (16).

6. Dispositif de fixation selon l'une des revendications 1 à 5, **caractérisé en ce qu'**il est prévu, pour l'élément ou chaque élément de compensation (25, 26 ; 34, 35, 36), une butée de profondeur (1, 22, 23).

7. Dispositif de fixation selon la revendication 6, **caractérisé en ce qu'**il est prévu au niveau d'un élément formant couvercle (10) une portion de recouvrement (15) qui, lorsqu'elle est rabattue en position de fermeture, recouvre la douille d'emmanchement (16).

8. Elément rapporté équipé d'un dispositif de fixation selon l'une des revendications 1 à 7.

9. Elément rapporté selon la revendication 8 comprenant une portion de recouvrement (15) recouvrant la douille d'emmanchement (16).

10. Elément rapporté selon la revendication 8 ou la revendication 9, qui est agencé pour faire fonction de support de canalisation (2).
